# EUROPEAN PATENT APPLICATION

(11) **EP 4 123 543 A1**
(43) Date of publication of application: **25.01.2023**
(21) Application number: 21187289.0
(22) Date of filing: 22.07.2021
(51) Int. Cl.: G06Q 20/40, G06Q 20/20, G06Q 20/32

(54) **METHOD AND SYSTEM FOR OPERATING A MOBILE POINT-OF-SALES APPLICATION**

(71) Applicant: Deutsche Telekom AG, 53113 Bonn (DE)
(72) Inventor: SCHNIEDERS, Dominik, 52078 Aachen (DE); SPITZ, Stephan, 85757 Karlsfeld (DE); GEUPEL, Hermann, 81925 Munich (DE)
(74) Representative: Raible Deissler Lehmann Patentanwälte PartG mbB

(57) **Abstract**

The present invention refers to a method for operating a mobile Point-of-Sales, mPOS, application. The method comprises the steps: a backend server (10) executes an application backend (140) of the mPOS application (14), a terminal device (11) executes an application frontend (141) of the mPOS application (14) that acts, upon launch, as an I/O interface with a human machine interface displayed by a touch screen of the terminal device, the application backend (140), upon receipt of a transaction request (3), transmits a layout for the human machine interface for entering a personal key, particularly a personal identification number, PIN, to the application frontend (141) and the application frontend (141), upon receipt of the authorization request (4) and the layout, provides the human machine interface with the received layout.

The present invention also refers to a respective system.

## Description

The invention relates to a method for operating a mobile Point-of-Sales, mPOS, application in a communication network. Furthermore, the invention relates to a system for operating a mobile Point-of-Sales, mPOS, application in a communication network.

A mPOS application is used for completing a purchase, particularly a transaction, e.g. a payment, and is usually executed on a COTS (Common of the Shelf) device.

The mPOS application, i.e. the COTS device is assigned to and configured for a particular user, e.g. a merchant. For operating a mPOS application, particularly for completing a transaction, the user provides the COTS device with transaction data. The transaction data may be automatically provided by the mobile point-of-sale (POS) application implemented on the COTS device or manually provided by the user operating a human machine interface of the COTS device, e.g. by hitting a keypad of the COTS device or by touching a keypad displayed by a touch screen of the COTS device. The transaction data to be provided at least comprises a transaction amount, e.g. an amount of money corresponding to a price of a product to be sold.

During a known operation of the mPOS application, the mPOS application is executed by the COTS device that is connected via a connection to a communication network. When the mPOS application is provided with the transaction data, a further user, e.g. a customer, is required to check the provided transaction data, to provide further transaction data, e.g. data indicating an account to be debited, and to authorize the transaction. The further user may provide a transaction device comprising the further transaction data, e.g. a payment card or a further terminal device, for being read by the COTS device, and additionally provide a personal key, e.g. a personal identification number (PIN), by operating the human machine interface of the COTS device, e.g. by hitting a keypad of the COTS device or by touching a keypad displayed by a touch screen of the COTS device. When the provided personal key matches the transaction device the mPOS application considers the transaction to be authorized and completes the transaction by transmitting a transaction request indicating the transaction and comprising the transaction data, the further transaction data and a corresponding transaction authorization via the connection to a remote network server, particularly to a payment system as part of a payment infrastructure that is installed on the remote network server.

As described above, the further user has to provide a personal key, e.g. a personal identification number (PIN), by operating the human machine interface of the COTS device, e.g. by hitting a keypad of the COTS device or by touching a keypad displayed by a touch screen of the COTS device and to operate the COTS device for authorizing the transaction. The further user may suffer from a certain discomfort or anxiety in presenting sensitive data, particularly a personal key associated with him. Such mPOS application is exposed to many attacks. An attack surface of a standard Android/iOS device is quite high. For this reason, mPOS solutions on a COTS device are combined with an extensive external monitoring system, which guarantees the health of the device. However, this monitoring is complex and has a performance impact, too. Moreover, a mPOS application on a COTS device requires a complex setup and personalisation procedure in which a respective merchant and the COTS device have to be verified remotely. These shortcomings may reduce a wide acceptance of such methods and systems for completing a transaction, i.e. for operating a mPOS application.

It is, therefore, an object of the invention to suggest a method for operating a mobile Point-of-Sales, mPOS, application which provides a safe protection of both sensitive data and health of the merchant's device. A further object of the invention is a system for operating a mobile Point-of-Sales, mPOS, application. The invention is specified by the independent claims. The dependent claims specify favourable embodiments of the invention.

A first aspect of the invention is a method for operating a mobile Point-of-Sales, mPOS, application, the mPOS application comprising executing a transaction. The inventive method comprises at least the following steps:
- a backend server connected to a communication network executes an application backend of the mPOS application,
- a terminal device connected to the communication network via a connection executes an application frontend of the mPOS application that acts, upon launch, as an I/O interface with a human machine interface displayed by a touch screen of the terminal device,
- the application frontend, for starting a transaction, captures transaction data associated with the transaction to be started, particularly via the human machine interface, and transmits a transaction request indicating the transaction to be started and comprising the transaction data to the application backend via the connection,
- the application backend, upon receipt of the transaction request, transmits an authorization request and a layout for the human machine interface for entering a personal key, particularly a personal identification number, PIN, to the application frontend via the connection,
- the application frontend, upon receipt of the authorization request and the layout, provides the human machine interface with the received layout, captures the personal key entered via the human machine interface, generates and transmits a transaction authorization comprising the captured personal key to the application backend via the connection, and
- the application backend, upon receipt of the transaction authorization, checks the captured personal key and, depending on the check, completes the transaction.

In many embodiments of the proposed method, generating the transaction authorization comprises reading further transaction data from a transaction device separate from the terminal device and arranged close to the terminal device and transmitting, as a part of the transaction authorization, the read further transaction data in conjunction with the personal key to the application backend.

When the application backend is provided with the transaction request and with the transaction data, the application backend transmits the authorization request to the application frontend, wherein the authorization request causes the application frontend to ask a further user, e.g. a customer, to check the provided transaction data, to provide further transaction data, e.g. data indicating an account to be debited, and to authorize the transaction by operating the human machine interface, e.g. by entering a personal key by touching a keypad designed with the received layout for the human machine interface and displayed by the touch screen. That means that the human machine interface comprises a keypad that is created according to the received layout and serves for entering the personal key.

According to one embodiment of the proposed method, generating the transaction authorization comprises reading account data as the further transaction data and authorization data from a credit card or a debit card as the transaction device and a payment is to be completed as the transaction. Credit cards and debit cards are used by a plurality of further users and, hence, are particularly important transaction devices to be supported for improving an acceptance and extending an application of the method.

The further user may provide the transaction device comprising the further transaction data, e.g. a payment card or a further terminal device, for being read by the terminal device, and additionally provide the personal key, e.g. a personal identification number (PIN), by operating the human machine interface of the terminal device, e.g. by touching the keypad displayed by the touch screen of the terminal device. According to the invention, the keypad displayed by the touch screen forms a part of the human machine interface and is designed according to the layout received from the application backend which is transmitted from the application backend to the application frontend upon receipt of the transaction request.

The application frontend captures the personal key entered via the human machine interface and transmits the captured personal key as a part of the transaction authorization to the application backend. The application backend, upon receipt of the transaction authorization, checks the captured personal key, and, depending on the check, completes the transaction. When the captured personal key matches the transaction device the application backend considers the check to be successful, i.e. the transaction to be authorized.

Completing the transaction comprises that the application backend may transmit a transaction confirmation to the application frontend wherein the transaction confirmation indicates a success of the transaction or an error preventing a success of the transaction. The transaction confirmation may be transmitted to the terminal device via a messaging service of the communication network, e.g. short message service (SMS).

According to a further embodiment of the proposed method checking the captured personal key comprises verifying whether the captured personal key matches the transaction device and considering the transaction to be authorized and ready to be completed by the transmission of a transaction confirmation only when the captured personal key matches the transaction device.

In many embodiments of the proposed method, capturing the personal key via the human machine interface comprises capturing x,y coordinates of key touch when entering the personal key by operating the touch screen displaying the human machine interface according to the received layout, the x,y coordinates being read from a coordinate system that is assigned to the layout.

The layout comprises a keypad that may be formed as a matrix, each matrix element being assigned a respective x-coordinate and a respective y-coordinate, i.e. each matrix element being assigned respective x,y coordinates in the x,y coordinate system. Different symbols may be assigned to the different matrix elements. Furthermore, each matrix element can be activated by touching it via the touch screen and, thus, a symbol assigned to the respective matrix element is considered as an entered symbol. The symbols are chosen from the group comprising at least the single-digit numbers 0 to 9 and further special characters, such as "#" and/or "*" and/or the like. Generating the layout by the application backend, upon receipt of the transaction request from the application frontend, comprises that an arrangement of the single-digit numbers and the further special characters on the keypad, i.e. an assignment of the single-digit numbers and the further special characters to respective matrix elements is generated, particularly using a random generator. Therefore, with each generated layout, a symbol is assigned to each matrix element, i.e. the respective x,y coordinates.

Generally, a personal key is defined by a given sequence of symbols, e.g. by a sequence of single-digit numbers 0 to 9. Thus, entering the personal key via touching the touch screen corresponds to touching a sequence of matrix elements, where the symbols assigned to the matrix elements in the touched sequence correspond exactly to the sequence of symbols of the entered personal key.

Furthermore, checking the captured personal key comprises, deducing the entered personal key from the captured x,y coordinates as captured personal key, particularly deducing a sequence of symbols, particularly single-digit numbers from the captured x,y coordinates as captured personal key, and comparing the captured personal key, particularly the sequence of single-digit numbers, with a personal key associated with the transaction device and stored in a database that is accessible to the application backend. The database may be located on the backend server or on a remote server.

Upon receipt of the transaction request, the application backend may generate the layout using a random generator. Therefore, the layout is varied or changed with each new transaction or with each new authorization request requiring a personal key. The layout, particularly the assignment of the symbols to the respective matrix elements, is not predictable but random. Accordingly, third parties are prevented from inferring the personal key, i.e. the respective sequence of symbols, by an entered touch pattern or touch gesture alone.

According to still a further embodiment of the proposed method, reading further transaction data from the transaction device and transmitting the further transaction data are executed by a low-level driver implemented as a first part of a CLF driver of the mPOS application on the application frontend wherein the low-level driver receives the further transaction data via a CLF chip from a credit card or a debit card as the transaction device and transmits the read further transaction data in conjunction with the captured personal key to a high-level driver implemented as a second part of the CLF driver on the application backend.

Still more preferably, the application backend executes a display driver as part of the mPOS application, the display driver generating the layout of the human machine interface for entering the personal key, particularly the personal identification number, PIN.

According to further embodiments of the proposed method, an edge cloud server located close to the terminal device executes the application backend as the backend server.

Further, the transaction application is operated using a cellular network as the communication network and the edge cloud server is located close to a radio cell of the cellular network the terminal device is arranged in.

In favourable embodiments, the application frontend authenticates a user of the terminal device. Authenticating the user, e.g. the merchant, increases a safety of the method which results in a further increased acceptance of the method.

Another aspect of the invention is a system for operating a mPOS application, comprising a mPOS application, a terminal device, an application frontend of the mPOS application to be executed by the terminal device, a backend server, an application backend to be executed by the backend server and a communication network for connecting the terminal device and the backend server. As the system comprises a backend server and a terminal device, e.g. a smartphone or the like, and a mPOS application, e.g. implemented as a software program product, distributed among the devices there is a very plurality and ease of possible applications of the invention.

The system may be created by simply installing the application backend and the application frontend on the backend server and the terminal device, respectively.

According to the invention, the terminal device, the application frontend, the application backend and the communication network are configured for together carrying out an inventive method. Due to the configuration, the involved devices together provide a method for operating the mPOS application, particularly for completing the comprised transaction safely, i.e. protecting sensitive data, particularly the personal key of a further user.

The communication network may be a cellular network and the backend server may be an edge cloud server located close to a radio cell of the cellular network the terminal device is arranged in.

It is an essential advantage of the method according to the invention that the personal key is entered via a human machine interface whose layout changes with every new start or restart of a transaction comprised by the mPOS application in a way that is not predictable or recognisable to a third party. The method, hence, enables the further user operating the terminal device to avoid presenting a personal key that can be easily recognized or derived by a third party. As a consequence, the personal key of the further user is safely protected against a fraud which results in an increased acceptance of the method.

Further advantages and configurations of the invention become apparent from the following description and the enclosed drawing.

It shall be understood that the features described previously and to be described subsequently may be used not only in the indicated combinations but also in different combinations or on their own without leaving the scope of the present invention.

The invention is described in detail by means of an exemplary embodiment and with reference to the drawing.

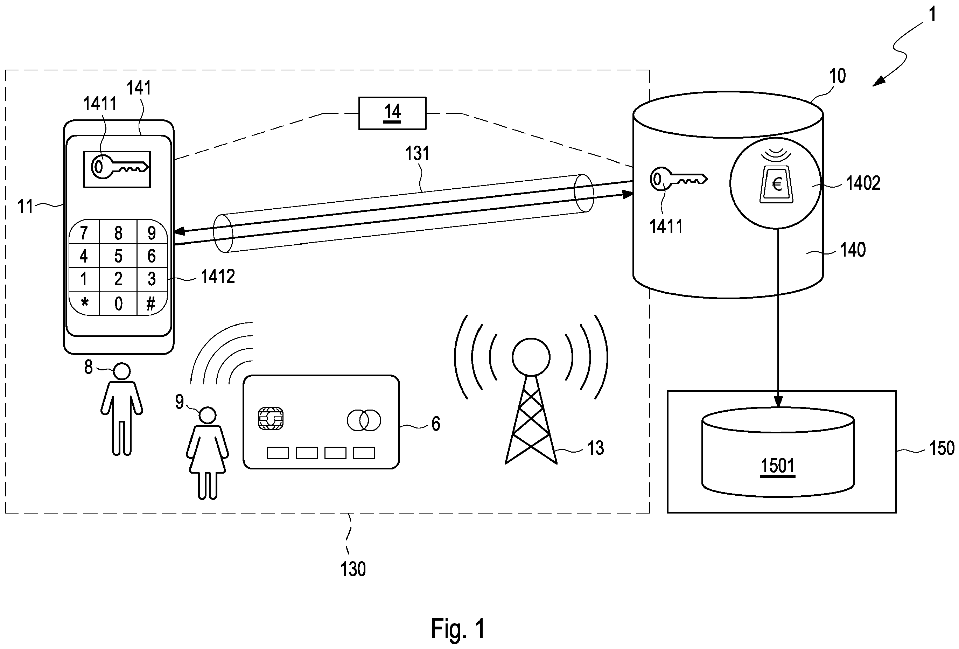

- Fig. 1: schematically shows an entity diagram of a system according to the invention for operating a mPOS application.

Fig. 1 schematically shows a diagram of a system 1 according to the invention for operating a mPOS application 14. The system 1 comprises the mPOS application 14, a terminal device 11, an application frontend 141 of the mPOS application 14 to be executed by the terminal device 11, and an edge cloud server 10 as a backend server, an application backend 140 to be executed by the edge cloud server 10 and a communication network 13 for connecting the terminal device 11 and the edge cloud server 10.

The edge cloud server 10 connected to the communication network 13 executes the application backend 140 of the mPOS application 14. The edge cloud server is located close to the terminal device 11. When the mPOS application 14 is operated using a cellular network as the communication network 13, the edge cloud server 10 may be located close to a radio cell 130 of the cellular network the terminal device 11 is arranged in.

The terminal device 11 connected to the communication network 13 executes the application frontend 141 of the mPOS application 14.

The application frontend 141 is configured to act, upon launch, as an I/O interface and to communicate with the application backend 140 via a secure connection 131 provided by the communication network 13. The application frontend 141 provides a human machine interface 1412 that can be operated by a user 8 and/or a further user 9 of the terminal device 11. The human machine interface 1412 comprises a keypad displayed by a touch screen of the terminal device 11. The user 8 and/or the further user 9 can operate the human machine interface 1412 and input data, such as a respective personal key, by touching the keypad accordingly. The keypad has a changeable layout, particularly a temporarily layout. The keypad is here designed as a grid or matrix with twelve matrix elements. Each matrix element is associated with respective x,y coordinates of a x,y coordination system underlying the layout. Each matrix element is assigned a symbol that can be activated by touching the respective matrix element accordingly. The symbols comprise here single-digit numbers 0 to 9 and specific symbols "#" and "*", i.e. the usual symbols of a phone keypad. The layout can be changed by changing the assignment of the symbols to the matrix elements.

During operation of the mPOS application 14, the application frontend 141 may first authenticate the user 8, e.g. a merchant, of the terminal device 11. For authenticating the user 8, the user 8 may provide a personal key by operating the terminal device 11, i.e. by operating the human machine interface 1412 of the terminal device 11, particularly by touching the keypad displayed by the touch screen of the terminal device 11. For starting a transaction associated with operating the mPOS application 14, the application frontend 141 captures transaction data associated with the transaction to be started and transmits a transaction request indicating the transaction to be started and comprising the transaction data, e.g. an amount of money corresponding to a price of a product, associated with the indicated transaction to the application backend 140 via the connection 131.

The application backend 140, upon receipt of the transaction request, generates and transmits an authorization request and the layout of the human machine interface 1412 for entering a personal key, particularly a personal identification number, PIN, of the further user 9, e.g. a merchant's customer. The layout here comprises a keypad, particularly a number field with the single-digit numbers 0 to 9 wherein an arrangement of the single-digit numbers in the number field is generated, particularly using a random generator, by the application backend 140 upon receipt of the transaction request from the application frontend 141. The number field is arranged in the virtual x,y coordinate system underlying the layout. Each number is assigned respective x,y coordinates. Besides the single-digit numbers there may be further special characters, such as "#" and/or "*" and/or the like.

The layout may be changed with each new start of a transaction comprised by the mPOS application 14 or with each new authorization request requiring entering a personal key.

The application frontend 141 executed on the terminal device 11 is provided with a first public private key pair for establishing a secure tunnel on the connection 131 between the terminal device 11 and the egde cloud server 10. The first public private key pair comprises a first public key and a first private key.

The first public key of the first public private key pair may be protected by a certificate signed by a trusted authority. The trusted authority may issue and sign the certificate. The user 8, e.g. the merchant may register with the trusted authority to use the mPOS application 14 and/or to get the certificate signed by the trusted authority.

For establishing the secure tunnel on the connection 131, the certificate is sent from the application frontend 141 to the application backend 140 and, upon verification of the certificate by the application backend 140, a second public private key pair with a second public key and a second private key is generated. The second public key of the second public private key pair is sent from the application backend 140 to the application frontend 141. At both, the application frontend 141 and the application backend 140, a common symmetric encryption key 1411 based on the first and second public private key pairs is created. To negotiate the common symmetric encryption key 1411 a suitable asymmetric key exchange procedure, i.e. a suitable asymmetric key exchange protocol is used. Known traditional public-key cryptosystems, i.e. algorithms, of securely exchanging encryption keys are Diffie-Hellman key exchange (DH), (better: Diffie-Hellman-Merkle key exchange (DHM)), Diffie Hellman Elliptic Curve (DHEC) and RSA (Rivest-Shamir-Adleman). DH, DHEC and RSA are based on number theoretic methods. Both, the application frontend 141 and the application backend 140 use a combination of the public and private keys to negotiate the common symmetric encryption key 1411 that is finally used by both, the application frontend 141 at the terminal device 11 and the application backend 140 at the edge cloud server 10 to communicate with each other. Thus, using the negotiated common symmetric encryption key 1411, an encrypted tunnel on the connection 131 is established as the secure tunnel between the application frontend 141 and the application backend 140 for data exchange, particularly for transmitting the generated layout of the human machine interface 1412 from the application backend 140 to the application frontend 141.

The application frontend 141, upon receipt of the authorization request and the layout, asks, e.g. via a display of the terminal device 11, for a personal key like a personal identification number (PIN) of the further user 9, e.g. a merchant's customer, and captures the personal key entered by the further user 9 via the human machine interface 1412 and generates and transmits a transaction authorization comprising the captured personal key to the application backend 140 via the connection 131, particularly via the secure tunnel on the connection 131.

Generating the transaction authorization may further comprise reading further transaction data from a transaction device 6, e.g. a credit card or a debit card of the further user 9, separate from the terminal device 11 and arranged close to the terminal device 11 and adding the read further transaction data to the transaction authorization. The transaction device 6 is provided by the further user 9. For reading the transaction device 6, the application frontend 141 is configured to identity a NFC tag. Thus, the application frontend is configured to wirelessly read the transaction device 6 using near field communication (NFC) and to receive the further transaction data from the transaction device 6. The further transaction data may comprise account data of the further user 9.

The application backend 140, upon receipt of the transaction authorization, checks the captured personal key and, depending on the check, completes the transaction. Checking the captured personal key comprises, deducing the entered personal key from the captured x,y coordinates as captured personal key, i.e. deducing a sequence of symbols, particularly single-digit numbers from the captured x,y coordinates as captured personal key, and comparing the captured personal key, particularly the sequence of single-digit numbers, with a personal key associated with the further user 9 and/or with the transaction device 6 and stored in a database that is accessible to the application backend 140. The database may be located on the edge cloud server 10 or on a remote server.

In the case that the captured personal key matches a personal key associated with the further user 9 and/or with the transaction device 6, the check is considered successful. Completing the transaction comprises transmitting a transaction confirmation to the application frontend 141 wherein the transaction confirmation indicates a success of the transaction or an error preventing a success of the transaction. When a credit card or a debit card is used as the transaction device 6, a payment is completed as the transaction. The application backend 140 further provides a payment kernel 1402 which is configured to receive the further transaction data, previously wirelessly read by the terminal device 11 from the transaction device 6 using near field communication (NFC) or Bluetooth. The payment kernel 1402 provides a secure interface, particularly a client unit configured to communicate with a transaction host, particularly a payment host 1501 of a transaction system, particularly a payment system 150 of the further user 9, e.g. a respective merchant's customer, the transaction/payment system 150 being located in a remote transaction infrastructure.

### Reference Numerals

- 1: system
- 10: edge cloud server
- 11: terminal device
- 13: communication network
- 130: radio cell
- 131: connection

- 14: mPOS application
- 140: application backend
- 1402: payment kernel
- 141: application frontend
- 1411: encryption key
- 1412: human machine interface

- 150: transaction system
- 1501: transaction host

- 6: transaction device

- 8: user
- 9: further user

## Claims

1. A method for operating a mobile Point-of-Sales, mPOS, application, the mPOS application comprising executing a transaction, the method comprising the steps:
- a backend server (10) connected to a communication network (13) executes an application backend (140) of the mPOS application (14),
- a terminal device (11) connected to the communication network (13) via a connection (131) executes an application frontend (141) of the mPOS application (14) that acts, upon launch, as an I/O interface with a human machine interface displayed by a touch screen of the terminal device,
- the application frontend (141), for starting a transaction (2), captures transaction data associated with the transaction (2) to be started and transmits a transaction request (3) indicating the transaction (2) to be started and comprising the transaction data (20) to the application backend (140) via the connection (131),
- the application backend (140), upon receipt of the transaction request (3), transmits an authorization request (4) and a layout for the human machine interface for entering a personal key, particularly a personal identification number, PIN, to the application frontend (141) via the connection (131);
- the application frontend (141), upon receipt of the authorization request (4) and the layout, provides the human machine interface with the received layout, captures the personal key entered via the human machine interface, generates and transmits a transaction authorization (5) comprising the captured personal key to the application backend (140) via the connection (131); and
- the application backend (140), upon receipt of the transaction authorization (5), checks the captured personal key and, depending on the check, completes the transaction (2).

2. The method according to claim 1, wherein generating the transaction authorization comprises reading further transaction data (21) from a transaction device (6) separate from the terminal device (11) and arranged close to the terminal device (11) and transmitting, as a part of the transaction authorization, the read further transaction data (21) in conjunction with the personal key to the application backend.

3. The method according to claim 2, wherein generating the transaction authorization comprises reading account data as the further transaction data (21) and authorization data (60) from a credit card or a debit card as the transaction device (6) and a payment is to be completed as the transaction (2).

4. The method according to claim 2 or 3, wherein checking the captured personal key comprises verifying whether the captured personal key matches the transaction device and considering the transaction to be authorized only when the captured personal key matches the transaction device.

5. The method according to any one of claims 2 to 4, wherein capturing the personal key via the human machine interface comprises capturing x,y coordinates of key touch when entering the personal key by a further user (9) operating the touch screen displaying the human machine interface with the received layout, the x,y coordinates being read from a coordinate system that is assigned to the layout.

6. The method according to claim 5 wherein the layout comprises a keypad, particularly a number field with single-digit numbers 0 to 9 wherein an arrangement of the single-digit numbers in the number field is generated, particularly using a random generator, by the application backend upon receipt of the transaction request from the application frontend.

7. The method according to claim 5 or 6 wherein checking the captured personal key comprises, deducing the entered personal key from the captured x,y coordinates as captured personal key, particularly deducing a sequence of single-digit numbers from the captured x,y coordinates as captured personal key, and comparing the captured personal key, particularly the sequence of single-digit numbers, with a personal key associated with the transaction device and stored in a database that is accessible to the application backend.

8. The method according to any one of claims 2 to 7, wherein reading further transaction data from the transaction device (6) and transmitting the further transaction data are executed by a low-level driver implemented as a first part of a CLF driver of the mPOS application on the application frontend wherein the low-level driver receives the further transaction data via a CLF chip from a SIM card chip of the terminal device (11) and transmits the read further transaction data in conjunction with the personal key to a high-level driver implemented as a second part of the CLF driver on the application backend.

9. The method according to any one of the preceding claims wherein the application backend executes a display driver as part of the mPOS application (14), the display driver generating the layout for the human machine interface for entering the personal key, particularly the personal identification number, PIN.

10. The method according to one of claims 1 to 9, wherein an edge cloud server located close to the terminal device (11) executes the application backend (140) as the backend server (10).

11. The method according to claim 10, wherein the transaction application (14) is operated using a cellular network as the communication network (13) and the edge cloud server is located close to a radio cell (130) of the cellular network the terminal device (11) is arranged in.

12. The method according to one of claims 1 to 11, wherein the application frontend (141) is being configured to authenticate a user (8) of the terminal device (11) via the human machine interface.

13. System for operating a mPOS application, comprising a mPOS application (14), a terminal device (11), an application frontend (141) of the mPOS application (14) to be executed by the terminal device (11), a backend server (10), an application backend (140) to be executed by the backend server (10) and a communication network (13) for connecting the terminal device (11) and the backend server (10), wherein the terminal device (11), the application frontend (141), the backend server (10), the application backend (140) and the communication network (13) are configured for together carrying out a method according to one of claims 1 to 12.

14. The system according to claim 13 wherein the communication network (13) is a cellular network and the backend server is an edge cloud server (10) located close to a radio cell (130) of the cellular network (13) the terminal device (11) is arranged in.

## Amended claims

### Amended claims in accordance with Rule 137(2) EPC.

1. A method for operating a mobile Point-of-Sales, mPOS, application, the mPOS application comprising executing a transaction, the method comprising the steps:
- a backend server (10) connected to a communication network (13) executes an application backend (140) of the mPOS application (14),
- a terminal device (11) connected to the communication network (13) via a connection (131) executes an application frontend (141) of the mPOS application (14) that acts, upon launch, as an I/O interface with a human machine interface displayed by a touch screen of the terminal device,
- the application frontend (141), for starting a transaction (2), captures transaction data associated with the transaction (2) to be started and transmits a transaction request (3) indicating the transaction (2) to be started and comprising the transaction data (20) to the application backend (140) via the connection (131),
- the application backend (140), upon receipt of the transaction request (3), transmits an authorization request (4) and a layout for the human machine interface for entering a personal key, particularly a personal identification number, PIN, to the application frontend (141) via the connection (131);
- the application frontend (141), upon receipt of the authorization request (4) and the layout, provides the human machine interface with the received layout, captures the personal key entered via the human machine interface, generates and transmits a transaction authorization (5) comprising the captured personal key to the application backend (140) via the connection (131); and
- the application backend (140), upon receipt of the transaction authorization (5), checks the captured personal key and, depending on the check, completes the transaction (2),
wherein, for establishing a secure tunnel on the connection (131), the application frontend (141) executed on the terminal device (11) is provided with a first public private key pair wherein the first public key of the first public private key pair is protected by a certificate signed by a trusted authority wherein the certificate is sent from the application frontend (141) to the application backend (140) and, upon verification of the certificate by the application backend (140), a second public private key pair with a second public key and a second private key is generated, and the second public key of the second public private key pair is sent from the application backend (140) to the application frontend 141 and at both, the application frontend (141) and the application backend (140), a common symmetric encryption key (1411) based on the first and second public private key pairs is created.

2. The method according to claim 1, wherein generating the transaction authorization comprises reading further transaction data (21) from a transaction device (6) separate from the terminal device (11) and arranged close to the terminal device (11) and transmitting, as a part of the transaction authorization, the read further transaction data (21) in conjunction with the personal key to the application backend.

3. The method according to claim 2, wherein generating the transaction authorization comprises reading account data as the further transaction data (21) and authorization data (60) from a credit card or a debit card as the transaction device (6) and a payment is to be completed as the transaction (2).

4. The method according to claim 2 or 3, wherein checking the captured personal key comprises verifying whether the captured personal key matches the transaction device and considering the transaction to be authorized only when the captured personal key matches the transaction device.

5. The method according to any one of claims 2 to 4, wherein capturing the personal key via the human machine interface comprises capturing x,y coordinates of key touch when entering the personal key by a further user (9) operating the touch screen displaying the human machine interface with the received layout, the x,y coordinates being read from a coordinate system that is assigned to the layout.

6. The method according to claim 5 wherein the layout comprises a keypad, particularly a number field with single-digit numbers 0 to 9 wherein an arrangement of the single-digit numbers in the number field is generated, particularly using a random generator, by the application backend upon receipt of the transaction request from the application frontend.

7. The method according to claim 5 or 6 wherein checking the captured personal key comprises, deducing the entered personal key from the captured x,y coordinates as captured personal key, particularly deducing a sequence of single-digit numbers from the captured x,y coordinates as captured personal key, and comparing the captured personal key, particularly the sequence of single-digit numbers, with a personal key associated with the transaction device and stored in a database that is accessible to the application backend.

8. The method according to any one of claims 2 to 7, wherein reading further transaction data from the transaction device (6) and transmitting the further transaction data are executed by a low-level driver implemented as a first part of a CLF driver of the mPOS application on the application frontend wherein the low-level driver receives the further transaction data via a CLF chip from a SIM card chip of the terminal device (11) and transmits the read further transaction data in conjunction with the personal key to a high-level driver implemented as a second part of the CLF driver on the application backend.

9. The method according to any one of the preceding claims wherein the application backend executes a display driver as part of the mPOS application (14), the display driver generating the layout for the human machine interface for entering the personal key, particularly the personal identification number, PIN.

10. The method according to one of claims 1 to 9, wherein an edge cloud server located close to the terminal device (11) executes the application backend (140) as the backend server (10).

11. The method according to claim 10, wherein the transaction application (14) is operated using a cellular network as the communication network (13) and the edge cloud server is located close to a radio cell (130) of the cellular network the terminal device (11) is arranged in.

12. The method according to one of claims 1 to 11, wherein the application frontend (141) is being configured to authenticate a user (8) of the terminal device (11) via the human machine interface.

13. System for operating a mPOS application, comprising a mPOS application (14), a terminal device (11), an application frontend (141) of the mPOS application (14) to be executed by the terminal device (11), a backend server (10), an application backend (140) to be executed by the backend server (10) and a communication network (13) for connecting the terminal device (11) and the backend server (10), wherein the terminal device (11), the application frontend (141), the backend server (10), the application backend (140) and the communication network (13) are configured for together carrying out a method according to one of claims 1 to 12.

14. The system according to claim 13 wherein the communication network (13) is a cellular network and the backend server is an edge cloud server (10) located close to a radio cell (130) of the cellular network (13) the terminal device (11) is arranged in.
